# EUROPÄISCHE PATENTSCHRIFT

(11) **EP 2 124 384 B1**
(45) Veröffentlichungstag und Bekanntmachung des Hinweises auf die Patenterteilung: **16.05.2012**
(21) Anmeldenummer: 09003938.9
(22) Anmeldetag: 19.03.2009
(51) Int. Cl.: H04L 12/14, H04W 4/24

(54) **Verfahren zur Erkennung funktionsspezifischer Datenpakete**
Method of detecting function-specific data packages
Procédé de reconnaissance de paquets de données spécifiques à des fonctions

(30) Priorität: 23.05.2008 DE 102008024796
(43) Veröffentlichungstag der Anmeldung: 25.11.2009
(73) Patentinhaber: Deutsche Telekom AG, 53113 Bonn (DE)
(72) Erfinder: Hasemann, Jörg-Micheal, 27321 Emtinghausen (DE)
(74) Vertreter: Braun-Dullaeus, Karl-Ulrich

(56) Entgegenhaltungen:
- EP-A- 1 708 433
- EP-A- 1 746 772
- WO-A1-2005/004390
- "Policy and charging control architecture" 3GPP TS 23.203 V.8.0.0, [Online] 1. Dezember 2007 (2007-12-01), XP002536991 Gefunden im Internet: URL:www.3gpp.org> [gefunden am 2009-07-14]
- "Telecommunication management; Charging management; charging architecture and principles" 3GPP TS 32.240 V8.2.0, [Online] 1. März 2008 (2008-03-01), XP002536992 Gefunden im Internet: URL:www.3gpp.org> [gefunden am 2009-07-14]

## Beschreibung

Die Erfindung betrifft ein Verfahren zur Erkennung von funktionsspezifischen Datenpaketen, insbesondere zum Zwecke der späteren Abrechnung, wobei die Datenpakete von einem sendenden Endgerät erzeugt werden und über ein Datenleitungsnetz, insbesondere das Internet, an ein empfangendes Endgerät verschickt werden, wobei die Datenpakete einen Kopfbereich ("Header") und einen Datenanhang ("Payload") aufweisen, wobei die Datenpakete einer speziellen Funktionalität, insbesondere einem besonderen Dienst, zugeordnet sind und von einer entsprechenden auf dem sendenden Endgerät realisierten Funktion erzeugt sind. Zudem betrifft die Erfindung eine Vorrichtung zur Umsetzung dieses Verfahrens.

Für das "Billing", also die Abrechnung von Telekommunikationsdienstleistungen, sind verschiedene Modelle bekannt: So gibt es zum einen Verbindungs ("Session") basierte Modelle, bei denen die Verbindung einer der Parteien, normalerweise der anrufenden Partei, in Rechnung gestellt wird. Wie beispielsweise bei den in Deutschland bekannten "0800" Nummern wird die Verbindung jedoch mitunter der angerufenen Partei berechnet. Es gibt sogar vereinzelt, siehe "peterzahlt.de", die Möglichkeit, dass eine dritte Partei für die Kosten der Verbindung aufkommt. Die Finanzierung erfolgt dann insbesondere über Werbeeinblendungen.

Seit einiger Zeit sind auch sogenannte "Flatrate"-Modelle bekannt, bei denen die anrufende Partei entsprechend einem Vertrag mit dem Anbieter sämtliche abgehenden Telekommunikationsdienstleistung, die neben einem Telefonnetz auch das Internet nutzen können, über Pauschalzahlungen vergütet.

Zudem sind volumenabhängige Modelle bekannt, bei denen die Abrechnung auf der Basis des übertragenen Datenvolumens erfolgt. Ähnliches gilt für Modelle, bei denen das Billing auf Basis der Nutzung eines spezifischen Datenformats, also einer bestimmten Übertragungsart, wie bei SMS und MMS, erfolgt, wobei dieses Billing unabhängig vom übermittelten Daten Volumen ist.

Allerdings sind die derzeit bekannten Abrechnungsmodelle in ihren Möglichkeiten der Tarifierung spezifischer Services oder Dienste beschränkt. Insbesondere ist es für den Kunden oft schwierig, abschätzen zu können, wie viel Datenvolumen ein bestimmter Service benötigt und was die Nutzung des Services tatsächlich kostet. Diese Ungewissheit wirkt sich gerade bei den vermeintlich teueren mobilen Diensten auf deren Attraktivität aus. Diese werden nach wie vor nur bedingt angenommen. Eine transparentere Abrechnung würde die Akzeptanz insbesondere solcher mobilen Dienste erhöhen. Allerdings ist es Vorraussetzung für die Service-basierte Abrechnung, dass der Anbieter zunächst einmal die Nutzung des Service durch den Kunden überhaupt erkennt.

Das Erkennen der Nutzung ist für den Netzbetreiber in den Fällen einfach, wenn der Service netzseitig, also insbesondere durch den Netzbetreiber, bereit gestellt wird. In diesem Fall braucht der Datenverkehr lediglich daraufhin überprüft zu werden, inwieweit die IP-Adresse des Service Rechners als Zieladresse mit eingehendem Datenverkehr oder als Ursprungsadresse mit ausgehendem Datenverkehr verwendet wird. Ebenso einfach ist die Erkennung auch, wenn für die Servicenutzung, wie beispielsweise im Fall von SMS oder MMS, eine besondere technische Infrastruktur verwendet wird. Schwierig wird es jedoch in den Fällen, bei denen der Service auf einem individuellen Endgerät bereit gestellt wird. Ein Beispiel für eine solche Anwendung, die im wesentlichen ohne netzseitige Infrastruktur erbracht wird und lediglich das Netz zur Übertragung benutzt, ist "skype.com", wo vor der Inanspruchnahme des Dienstes eine entsprechende Software auf das Endgerät geladen werden muss.

Eine Möglichkeit den von derartigen Diensten erzeugten Datenverkehr zu erkennen böte das "Session Initiation Protocol" (SIP) mittels dem entsprechenden "Session Description Protocol" (SDP) nach RFC 3261. Dabei wird im SDP die Art der Session beschrieben. Wenn jedoch ein bezüglich der Datenvolumina "billiger" Session-Typ, beispielsweise das Videostreaming, verwendet wird, kann nicht sicher gestellt werden, dass dieser Service auch tatsächlich auf den beteiligten Endgeräten verwendet wird. So kann es gut sein, dass "Videostreaming" von den Endgeräten nur vorgegeben wird und tatsächlich ganz andere Services diesen "Billig-Modus" für sich nutzen.

Darüber hinaus sind SIP-basierende Service-Markierung problematisch, da SIP-Sessions in der Regel aus dem Signalisierungsdatenverkehr und dem Transportdatenverkehr bestehen. Das bedeutet, dass innerhalb des Netzes etwaige Servicemarkierungen in der SIP-Signalisierung mit den dazugehörigen Transportdatenverkehren in Deckung gebracht werden müssen. Dies geht mit einem erheblichen technischen Aufwand einher. Zudem ist eine SIP-basierende Service-Markierung an SIP-basierende Services gebunden.

Das Dokument "Policy and charging control architecture" 3GPP TS 23.203 V8.0.0 (2007-12) beschreibt u.a. netzseitig vorgehaltene Filter bzw. Identifier, die in einem Mobilfunk-Netz anhand der die Adressierung enthaltenden Header die im Netz versendeten Datenpakete einem speziellen Datenservice zuordnen.

In dem Dokument "Telecommunication management; Charging management; Charging architecture and principles" 3GPP TS 32.240 V8.2.0 (2008-03) wird ein Standard für die Abwicklung von Bezahlsystemen in Mobilfunk-Netzen beschrieben.

Dem EP 1 746 772 A1 ist ein Verfahren und System zur Vergebührung von Anwendungen und/oder den damit verbundenen Datenverkehr in einem Funk-Kommunikationssystem zu entnehmen, bei dem eine funknetzseitig vorgehaltene Funktion.

Die WO 2005/004390 A1 betrifft ein Verfahren zur Vergebührung von Verkehrsdaten mithilfe von IP-Klassen. Verkehrsdaten werden gemäß einer Zuodnungsvorschrift zu einer IP-Klasse zughörig makiert. Eine Netzeinheit entlang der Versandtroute der Verkehrsdaten wertet die Verkehrsdaten hinsichtlich Ihrer IP-Klasse zur Vergebührung aus und gibt das Ergebnis der Auswertung an eine weitere Netzeinheit weiter.

Die Aufgabe der vorliegenden Erfindung liegt nunmehr darin, dem Nutzer Transparenz zu verschaffen und es dem Netzbetreiber auf einfache und sichere Weise zu ermöglichen, die Abwicklung auch solcher Dienste über sein Netz zu kontrollieren, die von Endgeräten ausgehen und die die Netzstruktur lediglich zum Datentransfer nutzen. Dabei soll die Kontrolle insbesondere dem Zwecke der späteren Abrechnung dienen. Zudem ist es Aufgabe der Erfindung, ein System zur Umsetzung des Verfahrens vorzuschlagen.

Diese Aufgaben werden durch das Verfahren mit den Merkmalen des Anspruch 1, und das System nach Anspruch 8 gelöst. Vorteilhafte Ausführungsformen sind in den jeweiligen Unteransprüchen genannt.

Der wesentliche Efindungsgedanke liegt darin, dass die Datenpakete auf dem sendenden Endgerät mit einer ebenfalls in dem Endgerät erzeugten Markierung versehen werden, anhand derer jedes Datenpaket von einer im Datenleitungsnetz befindlichen Filterfunktion ("Service Charge Funktion") einem bestimmten Dienst zugeordnet werden kann. Eine solche Markierung wir von einer entsprechenden auf dem Endgerät installierten Funktion realisiert, ohne dass es zum Verlust des Informationsgehaltes kommt. Diese Funktion kann vom Netzbetreiber auf das Endgerät eines Kunden geladen ("upload") oder vom Kunden aus dem Netz gezogen ("download") werden. Die Markierung kann von einer Signatur gebildet werden, die dem Datenpaket angehängt wird. Entsprechend der Grundidee der Erfindung werden somit Datenströme ohne Veränderung der Headerinformationen der einzelnen Datenpakete service-spezifisch mit der Markierung versehen, wobei die Prüfsumme entsprechend angepasst werden kann.

Für diese Art der Markierung können aus dem Stand der Technik bekannte Verfahren der elektronischen Signatur, beispielsweise entsprechend des Public-Key Prinzips, verwendet werden. So wird als Markierung eine elektronische Signatur angebracht, die sich insbesondere privater und öffentlicher Schlüssel bedient. Anhand der markierten Datenströme kann der Netzbetreiber die Nutzung von Diensten erkennen, die außerhalb seines Zugangs generiert wurden, die aber sein Netz nutzen. Die Erfindung besteht somit gewissermaßen in einer Servicespezifischen Markierung respektive Verschlüsselung, wobei der Schlüssel insbesondere applikationsspezifisch ist.

Dabei ist es vorteilhaft, wenn sich die Signatur über den gesamten Datenanhang (Payload) oder zumindest über wesentlichen Teile davon erstreckt. Sie kann sich auch über weitere, den Payload ergänzende Informationen, wie die Nutzer-Identifikation, die Terminal-ID und/oder Ähnliches erstrecken.

Ein wesentlicher Vorteil ist die Service-spezifische Erkennung und die Möglichkeit des entsprechenden Billing oder auch der Diskontierung. Damit ergeben sich wesentliche Vorteile gegenüber Verfahren, die sich beispielsweise auf die oben beschriebene Service-Beschreibung im Rahmen von SIP/SDP beziehen. Ein weiterer wesentlicher Vorteil ist die Service-Erkennung auf der Ebene des Internetprotokolls ("IP-Ebene"). Damit ist die erfindungsgemäße Vorgehensweise für alle auf IP aufsetzenden Protokolle einsetzbar, so dass Service-spezifisches Billing für Anwendungen möglich wird, die auf SIP, http, RTP oder IP basieren.

Aus der Erkennung ergeben sich darüber hinaus weitere Vorteile. So ist beispielsweise bei einem Streaming über eine mobiles Endgerät eine Service-spezifische Erhöhung der Bandbreite oder der QoS-Parameter möglich. Aus Sicht eines Telekommunikationsunternehmens ist es von Vorteil, dass sich nunmehr auch die auf den Endgeräten generierten Dienste kontrollieren und abrechnen lassen. Damit werden die genannten Anwendungen wie Skype auch für Telekommunikationsuntemehmen mit Netzinfrastruktur werthaltig. Dabei ist es auch möglich, dass der Nutzer oder der Serviceprovider für seinen entsprechend markierten Dienst beim Netzbetreiber bessere Übertragungskonditionen einkauft, insbesondere eine höhere oder eine garantierte Bandbreite, einen geringeren Jitter, also weniger abrupte und unerwünschte Wechsel der Signalcharakteristik, und/oder geringe Latenzzeiten.

Zudem ermöglicht die erfindungsgemäße Vorgehensweise die Verlagerung der Service-Erzeugung auf immer kleinere und schnellere insbesondere mobile Endgeräte. Dies ist deshalb der Fall, weil dem Serviceprovider und dem Transportnetzprovider mit dem erfindungsgemäßen Verfahren ein Mittel zur Verfügung steht, mit dem sich endgeräteseitig erzeugte Services erkennen lassen. Dadurch, dass sich nun einerseits die bislang kostenfrei genutzten Dienste abrechnen lassen und andererseits servicespezifische Quality-of-Service-Zusagen für die Übertragung gemacht werden können, entsteht eine Win-Win-Situation für den Netzbetreiber und für den Anbieter der endgeräteseitig implementierten Dienste. Die erfindungsgemäße Vorgehensweise bietet eine faire, transparente und auf dem Servicebezogenen Nutzungsumfang basierende Abrechnung gegenüber dem Kunden.

Auch den umgekehrten Weg macht die Erfindung möglich. So können es die vom Netzbetreiber auf den Endgeräten seiner Kunden installierten Funktionen ermöglichen, dass eine bestimmte Art von Datentransfer nicht vom Billing erfasst wird. Zudem lassen sich auch Funktionen anbinden, die kontinuierlich Quality of Service Parameter des Netzes messen oder den aktuellen Aufenthaltsort bestimmen und diese Parameter dem Netzbetreiber melden. Insgesamt ist die Flexibilität gegenüber einer auf Ursprungs- und Zieladressen basierenden Abrechnung dadurch verbessert, dass IP-Adressen von Services verändert werden können, ohne dass dies Einfluss auf die Abrechnung hat.

Zudem kann ein Schutz gegenüber Nutzung von Anwendungen in Fremdnetzen gewährleistet werden. Schließlich sind die entsprechend dem hier dargestellten Verfahren modifizierten Anwendungen nicht ohne weiteres in Fremdnetzen nutzbar, es sei denn, das Fremdnetz stellt die Anwendung und die Schlüssel bereit. Aus Sicht des Netzbetreibers werden also Client-seitige Anwendungen an das Netz gekoppelt.

Die dargestellte Verfahrensweise ist gut skalierbar und lässt sich, beispielsweise als Teil eines "Session Border Controllers", als Komponente in Zugangsnetzwerkelementen abbilden.

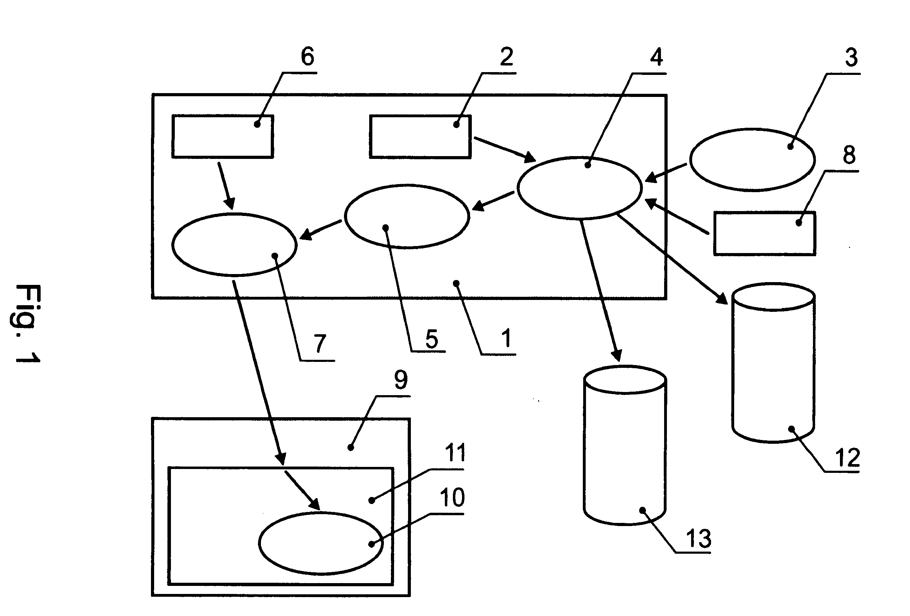

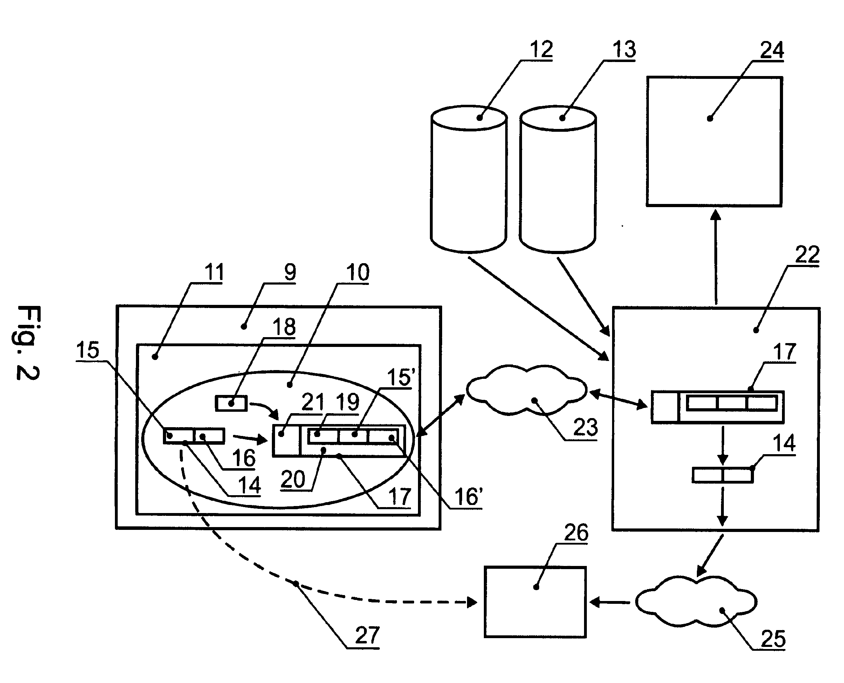

Nachfolgend wird die Erfindung anhand der Figuren 1 und 2 näher erklärt. Dabei zeigen:
- **Figur 1**: ein Schaubild, der "Service Deployment Function" und
- **Figur 2**: ein Schaubild des erfindungsgemäßen Verfahrensablaufes.

Systeme zur Umsetzung des erfindungsgemäßen Verfahrens weisen insbesondere folgende Komponenten auf: Zunächst sind die zur Service-Nutzung erforderlichen Endgeräte vorgesehen, die an das Netz des Telekommunikationsanbieters angebunden sind. Auf den Endgeräten sind die den Service erbringenden Funktionen installiert. Im Netz selber ist eine Service Charge Function (SCF) als Netzfunktion vorgesehen, die den Service spezifisch markierten Datenverkehr erkennt und erfasst. Zudem ist im Netz eine Service Deployment Function (SDF) realisiert, mit der die Funktionen konfiguriert und als "bundles" auf die Endgeräte geladen und installiert werden können. Das erfindungsgemäße Verfahren lässt sich in drei Schritte unterteilen:

### Schritt A: Vorbereiten der Funktionen und Aufladen ("Deployment")

Das Vorbereiten der Funktionen und deren Deployment auf das Endgerät werden von der in Figur 1 dargestellten Service Deployment Function SDS 1 wahrgenommen: Dabei wird zunächst vom Telekommunikationsuntemehmen ein zur Erstellung der Signatur erforderlicher privater Schlüssel 2 für den Datentransport herausgegeben und der Applikation mitgegeben. Zusammen mit dem beispielsweise in Java codierten Service Code 3 entsteht ein mit dem für den Datentransport vorgesehenen Schlüssel parametrisierter Source Code 4. Dabei ist der Schlüssel integraler Bestandteil des Installationspakets, das auf dem Endgerät installiert wird. Alle später von der Anwendung in das Netzwerk des Telekommunikationsuntemehmen hinausgehende Daten werden mittels dieses Schlüssels vom Endgerät signiert. Der private Schlüssel sowie der Anwendungscode können mit geeigneten Maßnahmen, wie beispielsweise mit Kompilierung oder mit Obfuskatoren, verschleiert werden 5.

Um die Integralität der Anwendung und des Datentransport-Schlüssels 2 sicherzustellen, werden seitens des Telekommunikationsunternehmens Installationspakete mit einem geeigneten Schlüssel 6 signiert, wobei dieser ungleich dem Schlüssel 2 für den Datentransport ist. Diese Signierung des Installationspakets 7 stellt die Originalität der Anwendung sicher und verhindert, dass Trojaner die Identität der Anwendung stehlen.

Mittels Remote Device Management Mechanismen werden die Installationspakete 7 auf dem durch den Datensatz 8 spezifizierten Endgerät 9 in einer entsprechend sicheren Laufzeitumgebung 11 installiert, wobei die installierten Funktionen dort mit 10 gekennzeichnet sind. In regelmäßigen Abständen wird zusätzlich der private Schlüssel verändert und per Remote Update auf den betroffenen Endgeräten aktualisiert, wobei die dargestellten Schritte wiederholt werden.

Die verwendeten Schlüssel können zur späteren Prüfung während des Datentransport durch das SCF in geeigneten Datenbanken abgelegt werden, beispielsweise global in einer Datenbank 12 für gültige Schlüssel oder Nutzer- und/oder Endgerätespezifisch in einer Nutzer Profil Datenbank 13.

### Schritt B: Service Markierung

In Figur 2 ist nunmehr das spezifizierte Endgerät 9 mit der sicheren Laufzeitumgebung und den erfindungsgemäßen Funktionalität, den installierten Funktionen 10, gezeigt. Mit der erfindungsgemäßen Funktionalität 10 wird der gesamte von einer auf dem Endgerät 9 laufenden Anwendung (Service) generierte ausgehende Verkehr auf Paket-Payload-Ebene verschlüsselt. Dabei setzt sich ein ursprüngliche von der Anwendung generiertes Datenpaket 14 zusammen aus einem Kopf ("Header") 15 und einer Datenanhang ("Payload") 16. Im Kopf 15 sind insbesondere die Zieladresse des Datenpakets sowie Informationen zur Integrität des Datenpakets abgelegt. Während der erfindungsgemäßen Markierung wird jedes Datenpaket 14 in ein neues Datenpaket 17 umgewandelt:

Über das ursprüngliche Datenpaket 14 wird mit Hilfe des Schlüssel 18, der dem Schlüssel 2 entspricht, eine Signatur 19 erstellt, mit der ein neuer Payload 20 generiert wird. Dieser ergibt sich aus dem ursprünglichen Header 15', dem ursprünglichen Payload 16' und durch Voranstellen der Signatur 19. Für das Erstellen der Signatur werden gängige Verfahren unter Nutzung asymmetrischer Public-Key Verfahren genutzt. Im nächsten Schritt wird ein neuer Header 21 gebildet, der sich aus dem ursprünglichen Header 15 ergibt, wobei die Header 21 Prüfsumme der neuen Situation angepasst wird. Bis auf die Zieladresse, die zum Zwecke der Umleitung der Datenpakete 17 auf die Adresse der Service-Charge-Function (SCF) 22, angepasst wird, bleibt alles andere unverändert.

Sollte die Gesamtlänge des Datenpaketes 17 die Maximallänge übersteigen, kann dieses fragmentiert und der Payload auf zwei Datenpakete verteilt werden. In dieser Form wird das Datenpaket 17 nun herausgeschickt in Richtung Zieladresse, wobei die Zieladresse wie oben beschrieben auf das SCF weist.

### Schritt C: Identifizierung und Demarkierung

In Schritt B wurde die Zieladresse des Datenpakets 17 auf die des SCF 22 geändert, so dass es über das Netz 23 dort hin geleitet wird. Das SCF 22 verifiziert mittels des enthaltenen Public Key die Authentizität des Datenpaketes. Ist die Verifikation erfolgreich, so wird dies den nachgelagerten Systemen 24, gemeldet, die beispielsweise das Billing managen, so dass entsprechend des Services eine korrekte Tariffierung erfolgen kann. Dabei wird zunächst von dem Fall ausgegangen, dass beide Teilnehmer der Kommunikation direkt am Netz 23 des Teiekommunikationsuntemehmens angeschlossen sind. Damit werden bei der Tariffierung alle Teilnehmer berücksichtigt, der eine für ausgehenden Datenverkehr, der andere für eingehenden.

Ist die Verifikation nicht erfolgreich, wird das Datenpaket 17 verworfen. Gegebenenfalls kann die Funktionalität 24 eine "Fraud Detection" realisieren, um der Ursache, beispielsweise einem Hacking-Versuch, nachzugehen. Da die Schlüssel regelmäßig gewechselt werden, kann das SCF 22 anhand der Datenbank 12 prüfen, ob gegebenenfalls die verwendeten Public-Keys veraltet sind. Auch ein Abgleich mit der User Profile Datenbank 13 kann durchgeführt werden. Kann der Fehler anhand der Prüfungen nicht behoben werden, wird das Datenpaket verworfen.

Nach der Identifizierung des Datenpaketes 17 erfolgt dessen Demarkierung, wobei die in Schritt B getätigten Schritte rückgängig gemacht werden. Das bedeutet, dass das ursprüngliche Datenpaket 14 mit ursprünglichem Header 15, ursprünglichem Payload 16 und der entsprechend ursprünglichen Adresse wieder hergestellt wird und über das Netz 25 an den ursprünglich beabsichtigten Adressaten 26 geleitet wird. Dieser wäre ohne die erfindungsgemäße "Umleitung" direkt auf dem Weg 27 über das nicht dargestellte Netz angesprochen worden.

## Patentansprüche

1. Verfahren zur Erkennung von funktionsspezifischen Datenpaketen, die von einem sendenden Endgerät erzeugt werden und über ein Datenleitungsnetz an ein empfangendes Endgerät verschickt werden,
wobei die Datenpakete einen Kopfbereich ("Header") und einen Datenanhang ("Payload") aufweisen, wobei die Datenpakete einem besonderen Dienst zugeordnet und von einer entsprechenden auf dem sendenden Endgerät realisierten Funktion erzeugt sind,
wobei den Datenpaketen ohne Verlust des Informationsgehaltes eine im Endgerät erzeugte dienstspezifische Markierung angehängt wird, anhand derer eine im Datenleitungsnetz befindliche Filterfunktion ("Service Charge Funktion") die markierten Datenpakete erkennt und der speziellen Funktionalität zuordnet,
**dadurch gekennzeichnet,**
**dass** die Markierung von einer auf das Endgerät geladenen Funktion angebracht wird, und
**dass** als Markierung eine elektronische dienstspezifische Signatur angebracht wird.

2. Verfahren nach Anspruch 1,
**dadurch gekennzeichnet,**
**dass** das Aufladen der Funktion durch den Netzbetreiber vorgenommen wird.

3. Verfahren nach Anspruch 1 oder 2,
**dadurch gekennzeichnet,**
**dass** sich die Signatur privater und öffentlicher Schlüssel bedient.

4. Verfahren nach einem der vorherigen Ansprüche,
**dadurch gekennzeichnet,**
**dass** den Datenpaketen im Zuge der Markierung eine neue Adresse in den Header geschrieben wird, mit der sie zur Service Charge Funktion ("SCF") umgeleitet werden.

5. Verfahren nach einem der vorherigen Ansprüche,
**dadurch gekennzeichnet,**
**dass** innerhalb der SCF die Markierung entfernt wird und die Datenpakete wieder ihre ursprüngliche Form erhalten.

6. Verfahren nach einem der vorherigen Ansprüche,
**dadurch gekennzeichnet,**
**dass** die Filterung durch die SCF zum Zwecke der Abrechnung insbesondere der Inanspruchnahme des Netzes genutzt wird.

7. Verfahren nach einem der vorherigen Ansprüche,
**dadurch gekennzeichnet,**
**dass** die Datenpakete entsprechend einem auf IP aufsetzenden Protokoll versendet werden, wobei insbesondere eine Service-spezifische Abrechnung für Anwendungen möglich ist, die auf SIP, http, RTP oder IP basieren.

8. Verfahren nach einem der vorherigen Ansprüche,
**dadurch gekennzeichnet,**
**dass** bei Erkennung markierter Datenpakete eine Erhöhung der Bandbreite oder der QoS-Parameter initiiert wird.

9. System, welches das Verfahrens nach einem der vorherigen Ansprüche umsetzt.

## Claims

1. Method for identification of data packets of specific functions, which are generated by a sending terminal and which are sent to a receiving terminal via a data network,
wherein the data packets comprise a heading section ("Header") and an attachment ("Payload"), wherein the data packets are allocated to a specific service and are generated by a respective function, which is realized on the sending terminal,
wherein a service-specific marking is attached to the data packets, wherein the marking is generated in the terminal without loss of information, wherein a filtering function ("Service Charge Funktion"), which is located in the data network, identifies the marked data packets and allocates them to the specific functionality,
charakterized in,
that the marking is attached by a function, which is loaded onto the terminal, and
that an electronic service-specific signature is attached as the marking.

2. Method according to claim 1,
**characterized in,**
**that** the loading of the function is conducted by the network operator.

3. Method according to claims 1 or 2,
**characterized in,**
**that** the signature makes use of private and public keys.

4. Method according to one of the preceding claims,
charakterized in,
that during the procedure of marking a new adress is written in the header of the data packets, by means of which the data packets are redirected to the Service Charge Function ("SCF").

5. Method according to one of the preceding claims,
**characterized in,**
**that** whithin the SCF the marking will be removed and the data packets will assume their original form.

6. Method according to one of the preceding claims,
**characterized in,**
**that** the filtering performed by the SCF is used for the purpose of billing particularly of the usage of the network.

7. Method according to one of the preceding claims,
**characterized in,**
**that** the data packets are sent according to an IP-based protocol, wherein particularly a service-specific billing for applications is possible, which are based on SIP, http, RTP or IP.

8. Method according to one of the preceding claims,
**characterized in that**,
that during the identification of marked data packets an enhancement of the bandwidth or the QoS-parameter is initialized.

9. System, which implements the method according to one of the preceding claims.

## Revendications

1. Procédé destiné à identifier des paquets de données spécifiques à une fonction, qui sont générés par un terminal émetteur et sont envoyés par un réseau de ligne de données à un terminal récepteur,
les paquets de données présentant une zone d'en-tête ("Header") et une annexe de données ("Payload"), les paquets de données étant attribués à un service particulier et étant générés par une fonction appropriée et réalisée sur le terminal émetteur,
un marquage spécifique au service et généré dans le terminal étant annexé aux paquets de données sans perte de la teneur en information, marquage à l'aide duquel une fonction de filtre se trouvant dans le réseau de ligne de données ("fonction Service Charge") identifie les paquets de données repérés et les attribue à la fonctionnalité spéciale,
**caractérisé en ce que**
le marquage est placé par une fonction chargée sur le terminal, et
**en ce qu'**une signature électronique et spécifique au service est placée comme marquage.

2. Procédé selon la revendication 1,
**caractérisé en ce que**
le chargement de la fonction est effectué par l'exploitant du réseau.

3. Procédé selon la revendication 1 ou 2,
**caractérisé en ce que**
la signature utilise des codes privés et publics.

4. Procédé selon l'une des revendications précédentes,
**caractérisé en ce**
**qu'**aux paquets de données, dans le cadre du marquage, une nouvelle adresse est envoyée dans l'en-tête, avec laquelle ils sont déviés vers la fonction Service Charge ("SCF").

5. Procédé selon l'une des revendications précédentes,
**caractérisé en ce que**
le marquage est enlevé à l'intérieur de la SCF et les paquets de données retrouvent à nouveau leur forme d'origine.

6. Procédé selon l'une des revendications précédentes,
**caractérisé en ce que**
le filtrage est utilisé par la SCF pour le décompte, en particulier la mise à contribution du réseau.

7. Procédé selon l'une des revendications précédentes,
**caractérisé en ce que**
les paquets de données sont envoyés en fonction d'un protocole se plaçant sur IP, en particulier un décompte spécifique au service étant possible pour des applications, qui sont basées sur SIP, http, RTP ou IP.

8. Procédé selon l'une des revendications précédentes,
**caractérisé en ce**
**qu'**une élévation de la largeur de bande ou des paramètres QoS est amorcée en cas de détection de paquets de données marqués.

9. Système, qui met en oeuvre le procédé selon l'une des revendications précédentes.
